# NEUE EUROPÄISCHE PATENTSCHRIFT

(11) **EP 0 563 408 B2**
(45) Veröffentlichungstag und Bekanntmachung des Hinweises auf die Entscheidung über den Einspruch: **24.11.1999**
(45) Hinweis auf die Patenterteilung: 13.09.1995
(21) Anmeldenummer: 92105127.2
(22) Anmeldetag: 25.03.1992
(51) Int. Cl.: F02F 3/02, F16J 1/16, F16J 1/02, F16J 1/04

(54) **Kolben für Brennkraftmaschinen**
Piston for an internal combustion engine
Piston pour un moteur à combustion interne

(43) Veröffentlichungstag der Anmeldung: 06.10.1993
(73) Patentinhaber: ALCAN DEUTSCHLAND GMBH, D-37075 Göttingen (DE)
(72) Erfinder: Harrer, Josef, W-8501 Allersberg (DE); Kofahl, Klaus, W-7056 Weinstadt-Beutelsbach (DE); Stocker, Peter, W-7158 Sulsbach a. d. Murr. (DE)
(74) Vertreter: Füchsle, Klaus, Dipl.-Ing.

(56) Entgegenhaltungen:
- EP-A- 0 430 362
- EP-B- 0 171 825
- EP-B- 0 356 457
- JP-A- 643 054
- JP-U- 3 112 551
- JP-U- 5 739 565
- US-A- 1 763 523
- US-A- 3 626 815
- US-A- 4 694 735
- PATENT ABSTRACTS OF JAPAN vol. 6, no. 167 (M-153)(1045) 31. August 1982 & JP-A-57 81 143 (FUJI JUKOGYO K.K.) 21. Mai 1982

## Beschreibung

Die Erfindung betrifft einen Kolben, insbesondere aus Leichtmetall, für Brennkraftmaschinen mit im wesentlichen kreisrunden Zylinderbüchsen, mit einem in Umfangsrichtung im wesentlichen geschlossenen Kolbenschaft, gegenüber dessen Durchmesser in Richtung auf die Kolbenachse soweit zurückgesetzten Bolzennaben, daß der Abstand der äußeren Bolzennabenflächen 60-80% des Kolbendurchmessers entspricht, mit zwei dadurch am Kolbenschaft auf der Druck- und Gegendruckseite verbleibenden, die auf den Kolben wirkenden Querkraft aufnehmenden tragenden Schaftwandabschnitten, wobei der tragende Schaftwandabschnitt auf der Druckseite zumindest in Umfangsrichtung des Schafts größer ist als der tragende Schaftwandabschnitt auf der Gegendruckseite, und mit zwei die tragenden Schaftwandabschnitte verbindenden Wandabschnitten, die jeweils zumindest am offenen Schaftende in Kolbenumfangsrichtung durchgehend konvex nach außen gekrümmt sind.

Derartige Kolben sind aus der JP-U-64-3054 bekannt. Sie sind das Ergebnis einer längeren Entwicklung.

Zur Erfüllung der allgemeinen motortechnischen Entwicklungsziele:
- hohe Leistungsdichte entsprechend hohen Drehzahlen des Motors,
- große Laufruhe der Kolben,
- geringe Leistungsverluste durch Reibung zwischen Kolben und Zylinder,
wird nämlich schon lange angestrebt:
- das Kolbengewicht durch weitgehende Reduzierung der Wanddicken so gering wie möglich zu halten;
- die für die Aufnahme der Querkräfte verantwortlichen tragenden Schaftflächen des Kolbens dahingehend zu optimieren, daß sie nicht großer sind als nötig, um ein Durchdrücken des Ölfilms unter der Wirkung des spezifischen Flächendruckes zu verhüten, und so klein wie möglich, um die im Ölfilm ständig zu überwindenden Scherkräfte möglichst gering zu halten; und
- das Spiel zwischen Kolben- und Zylinderwand weitgehend zu reduzieren, um Kippbewegungen des Kolbens und damit Ausschlaggeräusche einzuschränken.

Auf dem Weg zu diesen Zielen wurde zunächst der Kolbenschaft von einer zylindrischen zu einer ovalen, balligen Außenform entwickelt. in dem Sinne, daß der Kolbenschaft in Richtung der Bolzenachse von der Anlage an der Zylinderwand um ein geringes Maß von unter 1 mm zurückgenommen wurde, um dem Kolben ein elastisches Abfedern von Maßüberdeckungen in der Pleuelschwingebene aufgrund thermischer Ausdehnung zu ermöglichen. Durch diese Maßnahme konnten die Einbauspiele senkrecht zur Bolzenachse reduziert werden.

Die Weiterentwicklung zu immer stärkerer Zurücknahme des Kolbenschafts in Bolzenrichtung führte zum sogenannten Kasten- oder H-Kolben, der nur noch in Druck- und Gegendruckrichtung etwa zylindrische Schaftbereiche als Tragflächen aufweist, in Bolzenrichtung dagegen stark zur Kolbenmittelachse hin zurückgesetzte, fast gerade Wandbereiche besitzt. Durch diese Maßnahme wurde nicht nur die von den anliegenden Schaftflächen verursachten Reibleistungsverluste weiter vermindert; es wurde zusammen mit der Verkürzung des Kolbenbolzens auch eine wesentliche Gewichtseinsparung erzielt (vgl. EP-A-0 171 825, insbesondere dortige Fig. 3).

Um den unterschiedlichen Belastungsverhältnissen des Kolbens auf der Druck- und Gegendruckseite Rechnung zu tragen, ist es darüber hinaus bekannt, die Tragfläche auf der Druckseite zumindestens in Umfangrichtung des Kolbenschaftes größer auszubilden als die Tragfläche auf der Gegendruckseite (vgl. EP-A-0 171 825, insbesondere dortige Fig. 4).

Der Mangel dieser Kolben nach dem beschriebenen Stand der Technik resultiert aus der gewählten Form bzw. dem gewählten Verlauf der Wandabschnitte, die die tragenden Wandabschnitte des Kolbenschafts miteinander verbinden, sowie aus der Art der Anbindung dieser Wandabschnitte an die die Tragflächen darstellenden Abschnitte des Kolbenschafts. Bei den bekannten Kolben verlaufen nämlich diese Verbindungs-Wandabschnitte im wesentlichen geradlinig und senkrecht zur Kolbenachse oder radial zum Anbindungspunkt an den zylindrischen tragenden Wandabschnitt, wodurch sie dem Kolbenschaft in Richtung der Pleuelschwingebene bzw. im Bereich der Tragflächenanbindung eine große Steifigkeit vermitteln. Ferner stellt der Übergang von den geraden Wandabschnitten in die zylindrischen Tragflächen mit nur einem, meist kleinen Abrundungsradius eine Zone hoher Spannungskonzentration dar.

Durch das im Motorbetrieb ständig notwendige elastische Federn der tragenden Schaftwandbereiche werden in diesen kritischen Übergangszonen leicht Werkstoff-Anrisse erzeugt. Im Stand der Technik wird diesen möglichen Anrissen durch Materialzulagen oder rippenartige Aussteifungen begegnet (s. nochmals EP-A-0 171 825, insbesondere Fig. 3 und 4), wodurch aber die unerwünschte Steifigkeit des Kolbenschafts und damit die Freß-gefahr des Kolbens noch weiter erhöht und ferner der angestrebten Gewichtseinsparung entgegengearbeitet wird.

Bei dem im Oberbegriff des Anspruchs vorausgesetzten Kolben nach der schon erwähnten JP-U-64-3054 ist nicht nur der tragende Schaftwandabschnitt auf der Druckseite in Umfangsrichtung des Schafts größer als der tragende Schaftwandabschnitt auf der Gegendruckseite, ebenso wie beim soeben besprochenen Kastenkolben gemäß der EP-A-0 171 825 (vgl. dortige Fig. 4), sondern es sind darüber hinaus die die tragenden Schaftwandabschnitte verbindenden Wandabschnitte zumindest im unterhalb der Bolzennaben gelegenen Bereich des Schafts konvex nach außen gekrümmt. Allerdings sind nach wie vor die Übergangsbereiche zwischen den tragenden Schaftwandabschnitten und den Verbindungs-Wandabschnitten sowie zwischen den Verbindungs-Wandabschnitten und den Bolzennaben in Umfangsrichtung durch abrupte Richtungswechsel gekennzeichet, mit der Folge, daß dort Spannungsspitzen auftreten, wenngleich dieser Kolben aufgrund der Konvexität der Verbindungs-Wandabschnitte im Bereich des unteren Schaftendes elastischer ist als der zuvor erörterte Kolbentyp nach der EP-A-0 171 825. Aufgrund der Tatsache, daß die Bolzennaben gegenüber den Verbindungs-Wandabschnitten radial nach außen vorstehen, ergeben sich bei gegebener Bolzenlänge in Umfangsrichtung kürzere tragende Schaftwandabschnitte als wenn, wie bei dem bekannten Kastenkolben (vgl. die EP-A-0 171 825, insbesondere die dortige Fig. 3), die Außenflächen der Verbindungs-Wandabschnitte in die äußeren Bolzennabenflächen bündig übergingen. Dadurch besitzt der bekannte Kolben eine erhöhte Flächenpressung.

Schließlich ist in der EP-A-0 430 362 ein Kolben beschrieben, dessen Verbindungs-Wandabschnitte zwischen den tragenden Schaftwandabhnitten über die gesamte Höhe des Schaftes konvex nach außen verlaufen; jedoch ist dieser Kolben symmetrisch ausgebildet, d.h. die beiden tragenden Schaftwandabschnitte sind in Umfangsrichtung gleich.

Gegenüber diesem Stand der Technik liegt der Erfindung das technische Problem zugrunde, einen Kolben zu schaffen, der bei Ausnutzung der Leichtbauweise eines herkömmlichen Kastenkolbens eine hohe Elastizität des gesamten Kolbenschaftes gewährleistet und bei dem Spannungskonzentrationen vermieden sind.

Dieses technische Problem wird durch einen Kolben mit den Merkmalen des Anspruchs 1 gelöst.

Zur Erläuterung der Vorteile und besonderen Ausbildung des erfindungsgemäßen Kolbens darf schon an dieser Stelle auf die Figuren eines bevorzugten Ausführungsbeispiels verwiesen werden, nachdem die erfindungsgemäßen Maßnahmen in erster Linie die Formgebung des Kolbens betreffen, und diese Formgebung am besten aus den angesprochenen Figuren ersichtlich wird. Es zeigt:
- Fig. 1: eine Seitenansicht des erfindungsgemäßen Kolbens in Kolbenbolzenrichtung,
- Fig. 2: einen Axialschnitt durch den Kolben nach Fig,1,
- Fig. 3: einen Querschnitt durch den Kolben gemäß der Schnittlinie B-B der Fig. 1, und
- Fig. 4: einen Querschnitt durch den erfindungsgemäßen Kolben nach der Schnittlinie A-A der Fig. 2.

An dem mit 10 bezeichneten Kolbenschaft des in den Figuren dargestellten Kolbens sind diametral gegenüberliegend zwei Tragflächen ausgebildet, wobei die Tragfläche auf der Gegendruckseite mit 11 und die Tragfläche auf der Druckseite mit 12 bezeichnet ist. Die Bolzennaben 13 sind gegenüber dem Außendurchmesser D des Kolbens in Richtung der Kolbenachse A zurückgesetzt, und zwar derart, daß der Abstand der äußeren Bolzennabenflächen 13a bevorzugt 0,6 bis 0,8 des Kolbendurchmessers D entspricht.

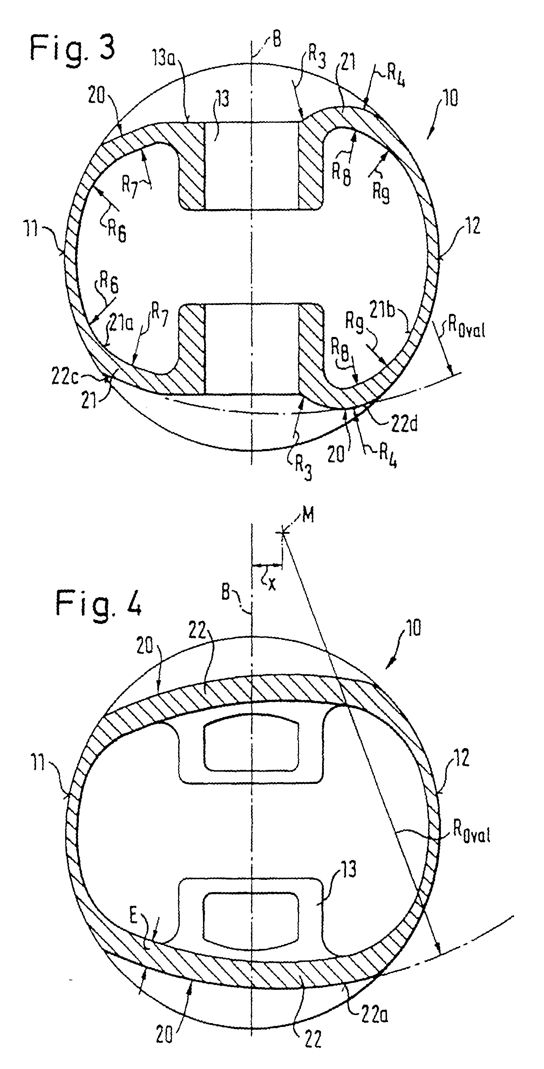

Wesentlich für den dargestellten Kolben ist die Maßnahme, daß die zwei die tragenden Schaftwandabschnitte 11, 12 verbindenden Wandabschnitte 20 jeweils zumindestens am offenen Schaftende unterhalb der Bolzennaben in Umfangsrichtung durchgehend konvex nach außen gekrümmt sind. Diese Ausbildung läßt sich am besten aus der Fig. 4 entnehmen. Aus dieser ist auch ersichtlich, daß die dort angesprochene Querschnittskonfiguration des Kolbenschafts illustrativ als "eiförmig" bezeichnet werden kann, resultierend aus den durchgehend konvex nach außen gekrümmten Wandabschnitten 20 sowie den im wesentlichen zylindrischen Tragflächen 11,12, wobei die Gegendruck-Tragfläche 11 in Umfangsrichtung kürzer ist als die Druck-Tragfläche 12.

Aber auch im Querschnitt B-B gemäß Fig. 3, d.h. auf Höhe der Kolbenbolzenachse B, besitzen die Verbindungs-Wandabschnitte 20 einen im wesentlichen durchgehend konvex nach außen gekrümmten Verlauf. Allerdings ist in diesen Wandverlauf die ebene äußere Bolzennabenfläche 13a eingebunden, so daß der jeweilige Verbindungs-Wandabschnitt 20 hinsichtlich des angesprochenen konvexen Verlaufes in jeweils zwei Teilabschnitte 21 aufgeteilt ist.

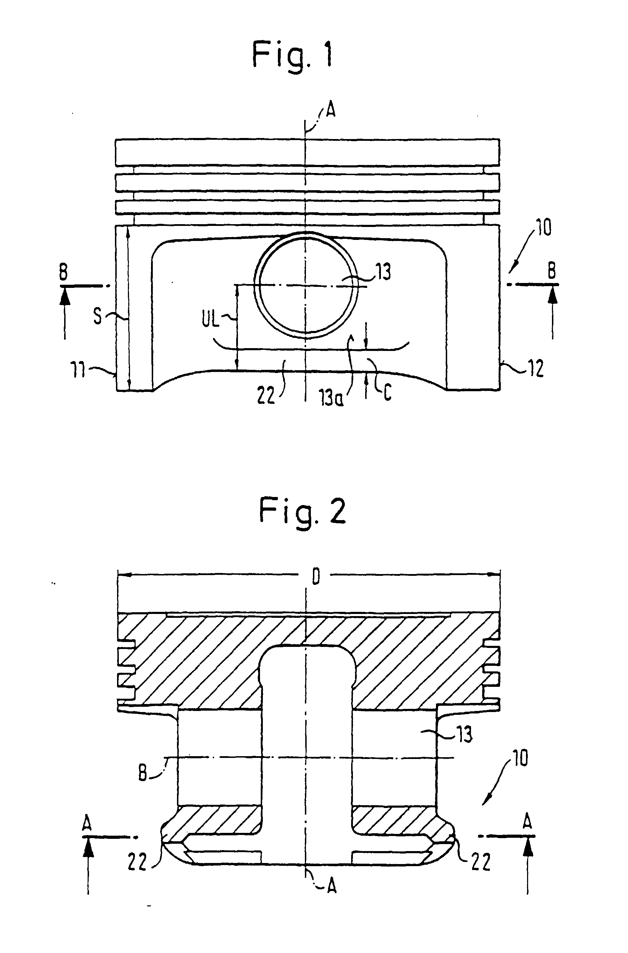

Ferner ist es wesentlich, daß der Bereich der Verbindungs-Wandabschnitte 20 unterhalb der Bolzennaben 13 jeweils als Verstärkungswulst 22 mit einer gegenüber dem übrigen Bereich des Schaftmantels größeren Wanddicke ausgebildet ist. Dieser Bereich der Verbindungs-Wandabschnitte ergibt sich wiederum am besten aus der Fig. 4; auch aus den Fig. 1 und 2 sind diese Verbindungs-Wandabschnitte 22 ersichtlich.

Die Außenkontur 22a des jeweiligen verstärkten Wandabschnitts 22 liegt auf einem Kreisbogen mit einem Radius Rₒᵥₐₗ entsprechend ca. 110 bis 120 % des Kolbendurchmessers D, dessen Mittelpunkt M relativ zur Bolzenachse B um eine Strecke x entsprechend 5 bis 10 % des Kolbendurchmessers D in Richtung zur Druckseite 12 des Kolbens hinverschoben ist, wie Fig. 4 verdeutlicht.

Die Höhe C (Fig. 1) des jeweiligen verstärkten Wandabschnitts 22 entspricht 5 bis 6 % des Kolbendurchmessers D, während seine Wanddicke E (Fig. 4) 5 bis 8 % des Kolbendurchmessers D beträgt.

Es ist ferner vorgesehen, daß die Anbindung der Verbindungs-Wandabschnitte 20 sowohl mit den Tragflächen 11, 12 einerseits als auch mit den Bolzennaben 13 andererseits weiche bzw. harmonische Übergangsradien aufweist.

Dazu ist zum einen die Innenkontur 21a des Schafts auf der Gegendruckseite im wesentlichen auf Höhe der Bolzennaben 13 bestimmt durch einen Radius R₆ im Übergangsbereich zwischen Tragfläche 11 und Verbindungs-Wandabschnitt 21, der 20 bis 25 % des Kolbendurchmessers D entspricht, sowie durch einen Radius R₇ im Bereich des eigentlichen Verbindungs-Wandabschnitts 21, der ca. 105 bis 111 % des Kolbendurchmessers D entspricht, wie am besten Fig. 3, oberer Bereich zeigt.

Auf der Druckseite hingegen wird die Innenkontur 21b des Schafts ebenfalls im wesentlichen auf Höhe der Bolzennaben 13 erzeugt durch einen Radius R₈ im Bereich des eigentlichen Verbindungswandabschnitts 21, der 25 bis 35 % des Kolbendurchmessers D entspricht, sowie durch einen Radius R₉ im Übergangsbereich zwischen dem tragenden Wandabschnitt 12 und dem Verbindungs-Wandabschnitt 21, der 45 bis 48 % des Kolbendurchmessers D entspricht.

Die Außenkontur der Verbindungs-Wandabschnitte 21 ist aufgrund der gleichen Überlegungen gestaltet. Auf der Gegendruckseite ist nämlich diese Außenkontur 22c des Verbindungs-Wandabschnitts 21 auf Höhe der Bolzennaben 13 auf der überwiegenden Länge ihres Verlaufs durch den Radius Rₒᵥₐₗ des verstärkten Wandabschnittes 22 bestimmt und fällt mit der Außenkontur 22a dieses Wandabschnittes 22 zusammen. Hingegen ergibt sich die Außenkontur 22d des Verbindungswandabschnitts 22 auf der Druckseite im wesentlichen auf Höhe der Bolzennaben 13 durch einen von der äußeren Bolzennabenfläche 13a ausgehenden und relativ zur Kolbenachse A von dieser wegführenden Abrundungsradius R₃ sowie einen Radius R₄, mit dem der betrachtete Verbindungs-Wandabschnitt 21 in den tragenden Wandabschnitt 12 übergeleitet wird und der in seinem dem tragendem Wandabschnitt 12 benachbarten Abschnitt deckungsgleich ist mit der Außenkontur 22a des verstärkten Wandabschnitts 22 unterhalb der Bolzennaben 13.

Weitere bevorzugte Ausgestaltungen des erfindungsgemäßen Kolbens sind den Ansprüchen 9 bis 12 zu entnehmen, für die eine ausdrückliche Bezugnahme auf die Figuren nicht erforderlich ist.

Der Vorteil der erfindungsgemäßen Kolbengestaltung liegt darin, daß die auf die Tragflächen einwirkenden Seitenkräfte über kontinuierlich gekrümmt verlaufende, elastisch federnde Bogenkonturen unter Vermeidung örtlicher Spannungskonzentrationen auf die gesamte Kolbenkonstruktion abgetragen werden, mit dem Effekt, daß wie bei einer Eierschale dünne Wände große Kräfte sicher aufnehmen können und eine leichte Gesamtkonstruktion mit dennoch ausreichender mechanischer Belastbarkeit erreicht wird. Insbesondere wird es durch den verstärkten Wandabschnitt 22 in seinem erfindungsgemäßen konvexen Verlauf ermöglicht, die auf die jeweils belastete Tragfläche einwirkenden Querkräfte auf den unbelasteten gegenüberliegenden Kolbenschaftabschnitt weich, aber dennoch wirksam abzuleiten. Der erfindungsgemäße Leichtbaukolben gewährleistet ein hohes Maß an Biegesteifigkeit der Kolbenkrone im Gegensatz zu anderen Leichtbaukonstruktionen im Stand der Technik, bei denen zur Gewichtsreduzierung und Minderung der Reibleistungsverluste der Kolbenschaft extrem kurz und durchbrochen ausgebildet wird (DE-C-35 23 438).

Zwar ist neben den schon geschilderten Kolben eine weitere Konstruktion eines Kasten- bzw. H-Kolbens bekannt (EP-A-0 385 390), bei dem bereits durch entsprechende Gestaltung der die Tragflächen verbindenden Wandabschnitte die Elastizität des Kolbenschafts, insbesondere in der Pleuelschwingebene, verbessert werden soll. Nach diesem Vorschlag sind die im wesentlichen geradlinigen Verbindungs-Wandabschnitte von den Tragflächenenden in etwa radial nach innen in Richtung auf die inneren Enden der Bolzennaben gerichtet. Dabei stellt allerdings die Anbindung des jeweiligen Verbindungs-Wandabschnitts an den zugehörigen, die Tragfläche darstellenden zylindrischen Abschnitt des Schafts eine Abknickung von über 90' dar, so daß dort erhebliche Spannungsspitzen auftreten werden, mit der Gefahr der schon geschilderten Werkstoff-Anrisse. Diese bekannte Ausgestaltung geht demgemäß schon von der Verlaufsrichtung und der Form der Verbindungs-Wandabschnitte einen völlig anderen Weg als der erfindungsgemäße Vorschlag.

Ein ähnliches Konzept wie der vorstehend erörterte Vorschlag ist aus der US-A-3,319,535 bekannt. Auch bei diesem Kasten- bzw. H-Kolben sind die die tragenden Schaftwandabschnitte verbindenden Wandabschnitte des Schafts am inneren Ende der Bolzennaben angeschlossen. Allerdings ist der jeweilige Bereich der Verbindungswandabschnitte zwischen der Tragfläche und der Bolzennabe relativ stark nach außen gekrümmt. Dadurch werden zwar die Tragflächen in Umfangsrichtung und die Elastizität des Schafts in der Pleuelschwingebene vergrößert. Aufgrund der relativ großen Krümmung dieses Bereichs auf kurzer Strecke sind jedoch Spannungsspitzen, insbesondere im Bereich des Scheitels der angesprochenen Krümmung, aber auch an der stark geknickten Anbindung des betrachteten Wandabschnittes am inneren Ende der jeweiligen Bolzennabe zwangsläufig. Ferner sind bei dem bekannten Kolben die angesprochenen gekrümmten Bereiche der Verbindungs-Wandabschnitte auf Höhe der Bolzennaben durch geradlinige Wandabschnitte überbrückt, deren Länge in etwa dem Außendurchmesser der Bolzennaben entspricht. Damit ist der gesamte Verlauf des Verbindungs-Wandabschnittes - in Kolben-Umfangsrichtung gesehen - geprägt durch starke Änderungen in Krümmung und Richtung. Demgegenüber ist die erfindungsgemäße Entwicklung gekennzeichnet durch einen harmonischen Verlauf des gesamten Querschnittes des Kolbenschaftes, insbesondere im Bereich des offenen Endes des Schaftes, wodurch, wie schon herausgestellt, die Querkräfte senkrecht zur Bolzenachse weich, aber dennoch wirksam abgetragen werden.

## Patentansprüche

1. Kolben, insbesondere aus Leichtmetall, für Brennkraftmaschinen, mit im wesentlichen kreisrunden Zylinderbüchsen, mit
- einem in Umfangsrichtung im wesentlichen geschlossenen Kolbenschaft (10),
- gegenüber dessen Durchmesser in Richtung auf die Kolbenachse (A) so weit zurückgesetzten Bolzennaben (13), daß der Abstand der äußeren Bolzennabenflächen (13a) 60 bis 80 % des Kolbendurchmessers entspricht,
- mit zwei dadurch am Kolbenschaft auf der Druck- und Gegendruckseite verbleibenden, die Querkräfte aufnehmenden tragenden Schaftwandabschnitten (11, 12),
- wobei der tragende Schaftwandabschnitt (12) auf der Druckseite zumindest in Umfangsrichtung des Schafts größer ist als der tragende Schaftwandabschnitt (11) auf der Gegendruckseite,
- und mit zwei die tragenden Schaftwandabschnitte (11, 12) verbindenden Wandabschnitten (20),
- die jeweils zumindest am offenen Schaftende - in Kolbenumfangsrichtung - durchgehend konvex nach außen gekrümmt sind,
dadurch **gekennzeichnet,** daß
- die äußeren Flächen der Verbindungs-Wandabschnitte (20, 21) in ihrem Verlauf in Kolbenumfangsrichtung von den äußeren Bolzennabenflächen (13a) ausgehen und
- die Verbindungswandabschnitte (20, 21) im Bereich der Bolzennaben (13) von den jeweiligen tragenden Schaftwandabschnitten (11, 12) bis zur äußeren Bolzennabenfläche (13a) mit unterschiedlicher Krümmung in Druck- und Gegendruckrichtung jeweils konvex verlaufen, wobei
- sich die Außenkontur (22d) des Verbindungs-Wandabschnitts (21) auf der Druckseite im wesentlichen auf Höhe der Bolzennaben (13) ergibt durch einen von der äußeren Bolzennabenfläche (13a) ausgehenden und relativ zur Kolbenachse (A) von dieser wegführenden Abrundungsradius (R₃)
- sowie einen Radius (R₄)
-- mit dem der Verbindungs-Wandabschnitt (21) in den tragenden Schaftwandabschnitt (12) übergeleitet wird, wobei
-- der von dem Radius (R₄) bestimmte Verbindungs- Wandabschnitt (21) in seinen dem tragenden Schaftwandabschnitt (12) benachbarten Abschnitt deckungsgleich ist mit der Außenkontur (22a) des verstärkten Wandabschnitts 22 unterhalb der Bolzennaben (13)
-- und der Radius (R₄) eine größere Krümmung bestimmt ald die maximale Krümmung der Außenkontur des Verbindungs- Wandabschnittes (20) auf der Gegendruckseite (11).

2. Kolben nach Ansspruch 1, dadurch gekennzeichnet, daß der Bereich der Verbindungs-Wandabschnitte (20) am offenen Schaftende jeweils als Verstärkungswulst (22) mit einer gegenüber dem übrigen Bereich des Schafts größeren Wanddicke ausgebildet ist.

3. Kolben nach Anspruch 2, dadurch gekennzeichnet, daß die Außenkontur (22a) des verstärkten Wandabschnitts (22) auf einem Kreisbogen mit einem Radius Rₒᵥₐₗ entsprechend ca. 110 bis 120 % des Kolbendurchmessers (D) liegt, dessen Mittelpunkt (M) relativ zur Bolzenachse (B) um eine Strecke (x) entsprechend 5 bis 10 % des Kolbendurchmessers (D) in Richtung zur Druckseite (12) des Kolbens hin verschoben ist.

4. Kolben nach Anspruch 2 oder 3, dadurch gekennzeichnet, daß die Höhe (C) des jeweiligen verstärkten Wandabschnitts (22) 5 bis 6 % des Kolbendurchmessers (D) entspricht, während seine Wanddicke (E) 5 bis 8 % des Kolbendurchmessers (D) beträgt.

5. Kolben nach einem der vorhergehenden Ansprüche, dadurch gekennzeichnet, daß die Anbindung der Verbindungs-Wandabschnitte (20) an die tragenden Schaftwandabschnitte (11, 12) weiche Übergangsradien (R₆, R₉) aufweist.

6. Kolben nach Anspruch 5, dadurch gekennzeichnet, daß die Innenkontur (21a) des Schafts auf der Gegendruckseite im wesentlichen auf Höhe der Bolzennaben (13) bestimmt ist durch einen Radius R₆ im Übergangsbereich zwischen Tragfläche (11) und Verbindungs-Wandabschnitt (21), der ca. 20 bis 25 % des Kolbendurchmessers (D) entspricht, sowie einen Radius R7 im Bereich des eigentlichen Verbindungs-Wandabschnitts (21), der ca. 105 bis 111 % des Kolbendurchmessers (D) entspricht.

7. Kolben nach Anspruch 5 oder 6, dadurch gekennzeichnet, daß die Innenkontur (21b) des Schafts auf der Druckseite im wesentlichen auf Höhe der Bolzennaben (13) bestimmt ist durch einen Radius R₈ im Bereich des Verbindungs-Wandabschnitts (21), der ca. 25 bis 35 % des Kolbendurchmessers (D) entspricht, sowie einen Radius R₉ im Übergangsbereich zwischen dem Verbindungs-Wandabschnitt (21) und dem tragenden Wandabschnitt (12), der 45 bis 48 % des Kolbendurchmessers (D) entspricht.

8. Kolben nach einem der vorhergehenden Ansprüche, dadurch gekennzeichnet, daß die Außenkontur (22c) des Verbindungs-Wandabschnitts (21) auf der Gegendruckseite im wesentlichen auf Höhe der Bolzennaben (13) auf der überwiegenden Länge ihres Verlaufs durch den Radius Rₒᵥₐₗ des verstärkten Wandabschnitts (22) bestimmt ist und mit der Außenkontur desselben deckungsgleich ist.

9. Kolben nach einem der vorhergehenden Ansprüche, dadurch gekennzeichnet, daß der tragende Wandabschnitt (12) auf der Druckseite in Umfangsrichtung ca. 80 bis 100 Bogengrade und der tragende Wandabschnitt (11) auf der Gegendruckseite ca. 70 bis 80 Bogengrade umfaßt.

10. Kolben nach einem der vorhergehenden Ansprüche, dadurch gekennzeichnet, daß die Schaftwanddicke auf der Druckseite (12) größer ist als auf der Gegendruckseite (11) und auf der Druckseite an der dünnsten Stelle ca. 2,5 % des Kolbendurchmessers (D) und auf der Gegendruckseite an der dünnsten Stelle ca. 2 % des Kolbendurchmessers (D) entspricht.

11. Kolben nach einem der vorhergehenden Ansprüche, dadurch gekennzeichnet, daß die Schafthöhe (S) ca. 35 bis 45 % des Kolbendurchmessers (D) beträgt.

12. Kolben nach einem der vorhergehenden Ansprüche, dadurch gekennzeichnet, daß die Unterlänge (UL) des Schafts (10) im Bolzennabenbereich (13) ca. 18 bis 22 % des Kolbendurchmessers (D) und im Tragflächenbereich (11, 12) ca. 25 bis 30 % beträgt.

## Claims

1. Piston, in particular made of light metal, for internal combustion engines, having substantially circular cylinder liners, having
- a piston shaft (10) which is substantially closed in a peripheral direction,
- pin hubs (13) which relative to the diameter of the piston shaft are set so far back towards the piston axis (A) that the distance between the outer pin hub surfaces (13a) corresponds to 60-80% of the piston diameter,
- having two bearing shaft wall portions (11, 12) which therefore remain on the piston shaft at the pressure and counterpressure side and absorb the transverse forces,
- wherein the bearing shaft wall portion (12) at the pressure side is greater at least in a peripheral direction of the shaft than the bearing shaft wall portion (11) at the counterpressure side,
- and having two wall portions (20) which connect the bearing shaft wall portions (11, 12)
- and are in each case at least at the open shaft end curved outwards in a continuously convex manner in the peripheral direction of the piston,
characterized in that
- the outer surfaces of the connecting wall portions (20, 21) in their course in a peripheral direction of the piston emanate from the outer pin hub surfaces (13a) and
- the connecting wall portions (20, 21) in the region of the pin hubs (13) extend from the respective bearing shaft wall portions (11, 12) to the outer pin hub surface (13a) in each case in a convex manner with a different curvature in pressure direction and in counterpressure direction, wherein
- the external contour (22d) of the connecting wall portion (21) at the pressure side substantially at the level of the pin hubs (13) is determined by a corner radius (R₃), which emanates from the outer pin hub surface (13a) and relative to the piston axis (A) leads away therefrom,
- as well as by a radius (R₄),
-- with which the connecting wall portion (21) is merged into the bearing shaft wall portion (12), wherein
-- the connecting wall portion (21), which is determined by the radius (R₄), in its portion adjacent to the bearing shaft wall portion (12) is coincident with the external contour (22a) of the reinforced wall portion (22) below the pin hubs (13)
-- and the radius (R₄) determines a greater curvature than the maximum curvature of the external contour of the connecting wall portion (20) at the counterpressure side (11).

2. Piston according to claim 1, characterized in that the region of the connecting wall portions (20) at the open shaft end in each case takes the form of a reinforcing bead (22) having a greater wall thickness than the remaining region of the shaft.

3. Piston according to claim 2, characterized in that the external contour (22a) of the reinforced wall portion (22) lies on an arc of a circle, whose radius Rₒᵥₐₗ corresponds to about 110 to 120% of the piston diameter (D) and whose centre (M) is displaced relative to the pin axis (B) by a distance (x) corresponding to 5 to 10% of the piston diameter (D) towards the pressure side (12) of the piston.

4. Piston according to claim 2 or 3, characterized in that the height (C) of the respective reinforced wall portion (22) corresponds to 5 to 6% of the piston diameter (D), while its wall thickness (E) is 5 to 8% of the piston diameter (D).

5. Piston according to one of the preceding claims, characterized in that the connection of the connecting wall portions (20) to the bearing shaft wall portions (11, 12) has smooth transition radii (R₆, R₉).

6. Piston according to claim 5, characterized in that the internal contour (21a) of the shaft at the counterpressure side substantially at the level of the pin hubs (13) is determined by a radius R₆ in the transition region between bearing surface (11) and connecting wall portion (21), which corresponds to about 20 to 25% of the piston diameter (D), as well as by a radius R₇ in the region of the actual connecting wall portion (21), which corresponds to about 105 to 111% of the piston diameter (D).

7. Piston according to claim 5 or 6, characterized in that the internal contour (21b) of the shaft at the pressure side substantially at the level of the pin hubs (13) is determined by a radius R₈ in the region of the connecting wall portion (21), which corresponds to about 25 to 35% of the piston diameter (D), as well as by a radius R₉ in the transition region between the connecting wall portion (21) and the bearing wall portion (12), which corresponds to 45 to 48% of the piston diameter (D).

8. Piston according to one of the preceding claims, characterized in that the external contour (22c) of the connecting wall portion (21) at the counterpressure side substantially at the level of the pin hubs (13) is determined over the predominant length of its course by the radius Rₒᵥₐₗ of the reinforced wall portion (22) and is coincident with the external contour of said reinforced wall portion.

9. Piston according to one of the preceding claims, characterized in that the bearing wall portion (12) at the pressure side in a peripheral direction encompasses about 80 to 100 degrees of arc and the bearing wall portion (11) at the counterpressure side encompasses about 70 to 80 degrees of arc.

10. Piston according to one of the preceding claims, characterized in that the shaft wall thickness is greater at the pressure side (12) than at the counterpressure side (11) and corresponds at the pressure side at the thinnest point to about 2.5% of the piston diameter (D) and at the counterpressure side at the thinnest point to about 2% of the piston diameter (D).

11. Piston according to one of the preceding claims, characterized in that the shaft height (S) is about 35 to 45% of the piston diameter (D).

12. Piston according to one of the preceding claims, characterized in that the under-length (UL) of the shaft (10) in the pin hub region (13) is about 18 to 22% of the piston diameter (D) and in the bearing surface region (11, 12) is about 25 to 30%.

## Revendications

1. Piston, en particulier en métal léger, pour moteurs à combustion interne comprenant des chemises de cylindre sensiblement circulaires, qui comprend
■ une jupe de piston (10) sensiblement fermée dans la direction de la circonférence,
■ des paliers d'axe (13) suffisamment en retrait, par rapport au diamètre de cette dernière, vers l'axe (A) du piston, pour que la distance séparant les surfaces extérieures (13a) des paliers d'axe corresponde à 60 à 80 % du diamètre du piston,
■ deux éléments porteurs (11, 12) de la paroi de la jupe qui subsistent en conséquence sur la jupe du piston, sur le côté pression et le côté contre-pression, et qui absorbent les forces transversales,
■ l'élément porteur (12) de la paroi de la jupe qui est situé du côté pression étant plus grand, au moins dans la direction de la circonférence de la jupe, que l'élément porteur (11) de paroi de la jupe situé du côté contre-pression,
■ ainsi que deux éléments de paroi (20) qui relient les éléments porteurs (11, 12) de la paroi de la jupe,
■ et dont chacun présente une courbure convexe continue vers l'extérieur - dans la direction de la circonférence du piston - au moins à l'extrémité ouverte de la jupe,
**caractérisé en ce que**
■ le tracé des surfaces extérieures des éléments de liaison (20, 21) de la paroi part des surfaces extérieures (13a) des paliers d'axe dans la direction de la circonférence du piston et
■ chacun des éléments de paroi de liaison (20, 21) présente une courbure convexe différente dans le sens de la pression et celui de la contre-pression dans la zone des paliers d'axe (13) de chacun des éléments porteurs (11, 12) de la paroi de la jupe jusqu'à la surface extérieure (13a) des paliers d'axe, où
• le contour extérieur (22d) de l'élément de paroi de liaison (21) situé sur le côté pression résulte essentiellement, au niveau des paliers (13) d'axe, d'un rayon d'arrondi (R₃) partant de la surface extérieure du palier d'axe (13a) et s'éloignant de l'axe du piston (A) par rapport à celui-ci
■ ainsi que d'un rayon (R₄)
• par lequel l'élément de paroi de liaison (21) forme la transition avec l'élément porteur (12) de la paroi de la jupe, où
• l'élément de paroi de liaison (21) déterminé par le rayon (R4) coïncide, dans sa partie voisine de l'élément porteur (12) de la paroi de la jupe, avec le contour extérieur (22a) de la partie renforcée de paroi (22) située au-dessous des paliers d'axe (13) -
• et le rayon (R₄) détermine une courbure supérieure à la courbure maximale du contour extérieur de l'élément de paroi de liaison (20) sur le côté (11) de la contre-pression.

2. Piston selon la revendication 1, caractérisé en ce que la zone de chaque élément de paroi de liaison (20) située à l'extrémité ouverte de la jupe est conformée en bourrelet de renfort (22) dont l'épaisseur de la paroi est plus grande que celle de la partie restante de la jupe.

3. Piston selon la revendication 2, caractérisé en ce que le contour extérieur (22a) de la partie surépaissie de la paroi (22) est situé sur un arc de cercle ayant un rayon Rₒᵥₐₗ qui correspond à environ 110 à 120 % du diamètre (D) du piston et dont le centre (M) est décalé par rapport à l'axe (B) du palier d'axe d'une distance (x) correspondant à 5 à 10 % du diamètre (D) du piston vers le côté pression (12) du piston.

4. Piston selon la revendication 2 ou 3, caractérisé en ce que la hauteur (C) de chaque partie surépaissie de paroi (22) correspond à 5 à 6% du diamètre (D) du piston, tandis que l'épaisseur (E) de sa paroi correspond à 5 à 8 % du diamètre (D) du piston.

5. Piston selon l'une des revendications précédentes, caractérisé en ce que la jonction des éléments de paroi de liaison (20) avec les éléments porteurs (11, 12) de la paroi de la jupe présente des rayons de transition douce (R₆, R₉).

6. Piston selon la revendication 5, caractérisé en ce que le contour intérieur (21a) de la jupe côté contre-pression est sensiblement déterminé, au niveau des paliers d'axe (13), dans la zone de transition entre la surface porteuse (11) et l'élément de paroi de liaison (21), par un rayon R₆ qui correspond à environ 20 à 25 % du diamètre (D) du piston, ainsi que, dans la zone de l'élément proprement dit de paroi de liaison (21), par un rayon R₇ qui correspond à environ 105 à 111 % du diamètre (D) du piston.

7. Piston selon la revendication 5 ou 6, caractérisé en ce que le contour intérieur (21b) de la jupe côté pression est sensiblement déterminé, au niveau des paliers d'axe (13), dans la zone des éléments de paroi de liaison (21), par un rayon R₈ qui correspond à environ 25 à 35 % du diamètre (D) du piston, ainsi que, dans la zone de transition entre l'élément de paroi de liaison (21) et l'élément porteur de paroi (12), par un rayon R₉ qui correspond à 45 à 48 % du diamètre (D) du piston.

8. Piston selon l'une des revendications précédentes, caractérisé en ce que le contour extérieur (22c) de l'élément de paroi de liaison (21) côté contre-pression est sensiblement déterminé, au niveau des paliers d'axe (13), sur la majeure partie de son tracé, par le rayon Rₒᵥₐₗ de l'élément surépaissi de paroi (22) et il est sensiblement coïncidant avec le contour extérieur de ce dernier.

9. Piston selon l'une des revendications précédentes, caractérisé en ce que l'élément porteur de paroi (12) côté pression se prolonge dans la direction de la circonférence sur environ 80 à 100 degrés d'arc et l'élément porteur de paroi (11) côté contre-pression se prolonge sur environ 70 à 80 degrés d'arc.

10. Piston selon l'une des revendications précédentes, caractérisé en ce que l'épaisseur de la paroi de la jupe côté pression (12) est plus grande que sur le côté contre-pression (11) et correspond à l'emplacement le plus mince du côté pression à environ 2,5 % du diamètre (D) du piston et à l'emplacement le plus mince du côté contre-pression à environ 2 % du diamètre (D) du piston.

11. Piston selon l'une des revendications précédentes, caractérisé en ce que la hauteur (S) de la jupe correspond à environ 35 à environ 45 % du diamètre (D) du piston.

12. Piston selon l'une des revendications précédentes, caractérisé en ce que la longueur (UL) du bas de la jupe (10) correspond dans la zone des paliers d'axe (13) à environ 18 à 22 % du diamètre (D) du piston et à environ 25 à 30 % dans la zone des surfaces portantes (11, 12).
